# EUROPEAN PATENT APPLICATION

(11) **EP 2 023 591 A2**
(43) Date of publication of application: **11.02.2009**
(21) Application number: 08250697.3
(22) Date of filing: 29.02.2008
(51) Int. Cl.: H04N 1/00, H04N 1/32

(54) **Image forming system, image forming apparatus, image forming method and print control apparatus**

(30) Priority: 08.08.2007 JP 2007206484
(71) Applicant: KONICA MINOLTA BUSINESS TECHNOLOGIES, INC., Chiyoda-ku Tokyo 100-0005 (JP)
(72) Inventor: Miyamoto, Yoshio, Tokyo 100-0005 (JP)
(74) Representative: Gille Hrabal Struck Neidlein Prop Roos

(57) **Abstract**

Disclosed is an image forming system comprising: a data processing apparatus (20); and an image forming apparatus (10), which are connected to each other through a communication line (N), and according to a print instruction transmitted from the data processing apparatus, the image forming apparatus performs an image forming on a sheet specified by the print instruction, wherein the image forming apparatus comprises: a setting section (141); a communication section (15); and a transmission control section (11), and the data processing apparatus comprises: a communication section (24); a registration section (23); and a printer driver section (21).

## Description

### BACKGROUND

### Field of the Invention

The present invention relates to an image forming system, an image forming apparatus, an image forming method, and a print control apparatus.

### Description of Related Art

In recent years, having prevailed is an image forming system in which data processing equipment installed with a printer driver such as a Personal Computer (PC) and the like controls an image forming apparatus through a communication network such as a Local Area Network (LAN) and the like.

In such image forming system, sheet sizes of regular forms conforming to the standard (for example, A4 size, B5 size and the like), supported by the image forming apparatus for image forming processing, are prepared in advance as sheet size options of the printer driver.

Thus, a user can perform the setting of the sheets for which an image forming is performed by the image forming apparatus, by a simple operation of only selecting the sheet size prepared in advance, on the printer driver.

Further, a technique is disclosed in which a main scanning direction width of a sheet is detected by a manual tray guide of a main body, and the main scanning direction width is transmitted to the printer driver to narrow down and display the similar size among irregular sheet sizes set in the driver (see Japanese Patent Application Laid Open Publication No. 2003-140859, hereinafter referred to as Patent Publication 1).

Moreover, a technique is disclosed in which a plurality of irregular sheet sizes which are once set in the printer driver are stored, and these sheet sizes can be selected to reuse the sheet size which has once been used (see Japanese Patent Application Laid Open Publication No. 2005-215972, hereinafter referred to as Patent Publication 2).

However, by the conventional image forming system and the technique of Patent Publication 1, when an image forming processing is performed for a sheet of an irregular sheet size which does not conform to the standard (irregular-sized sheet), the user not only has to perform the setting of the irregular sheet size for the image forming apparatus side but also has to perform the setting of the irregular sheet size for the printer driver side in the same manner. Thus the setting of the sheet size was troublesome.

Further, even by the technique of Patent Publication 2, when an image forming processing is performed for a sheet of an irregular sheet size which is used for the first time, the user has to perform the setting of the sheet size for both the image forming apparatus and the printer driver. Thus it took time for the setting of the sheet size.

### SUMMARY

The present invention was made in order to settle the above problems. It is one of the objects of the present invention to reduce the trouble in setting the sheet size of an irregular-sized sheet when an image forming is performed for an irregular-sized sheet by an image forming apparatus.

To achieve at least one of the above objects, and image forming system reflecting one aspect of the present invention, comprises:
a data processing apparatus; and
an image forming apparatus, wherein
   the data processing apparatus and the image forming apparatus are connected to each other through a communication line, and according to a print instruction transmitted from the data processing apparatus, the image forming apparatus performs an image forming on a sheet specified by the print instruction, wherein
   the image forming apparatus comprises:
      a setting section to set sheet information including irregular size information indicating a sheet size of an irregular-sized sheet to be used by the image forming apparatus;
      a communication section to perform communication with the data processing apparatus through the communication line; and
      a transmission control section to control the communication section to transmit the sheet information to the data processing apparatus, and
   the data processing apparatus comprises:
      a communication section to perform the communication with the image forming apparatus through the communication line;
      a registration section to register the sheet information received from the image forming apparatus through the communication section; and
      a printer driver section to provide, based on the sheet information registered in the registration section, a user with the irregular-sized sheet so as to be able to be specified, and to generate the print instruction including information of the irregular-sized sheet when the irregular-sized sheet is specified by the user.

Preferably, the sheet information includes name information which corresponds to each irregular-sized sheet.

Preferably, the sheet information includes margin amount information indicating a margin amount of an image, which is set for each irregular-sized sheet.

Preferably, the image forming apparatus comprises an operation section so that the user can perform a key input, and
the setting section sets the sheet information based on an operation signal input from the operation section.

Preferably, the image forming apparatus comprises an image reading section to read an original image to generate image data, and
the setting section sets the sheet size calculated based on the image data obtained by the image reading section as the irregular size information.

Preferably, the image forming apparatus comprises a detector which is provided in a sheet feeding section to output data according to the sheet size of the sheet to be fed, and
the setting section sets the sheet size specified according to the data obtained by the detector as the irregular size information.

Preferably, the data processing apparatus further comprises an obtaining request control section to control the communication section to transmit an obtaining request signal which is an obtaining request of the sheet information to the image forming apparatus, and
the transmission control section controls the communication section to transmit the sheet information set in the setting section to the data processing apparatus when the communication section receives the obtaining request signal from the data processing apparatus.

Preferably, the obtaining request control section of the data processing apparatus controls the communication section to transmit the obtaining request signal to the image forming apparatus when the data processing apparatus is activated.

### BRIEF DESCRIPTION OF THE DRAWINGS

These and other objects, advantages and features of the present invention will become more fully understood from the detailed description given hereinbelow and the appended drawings, and thus are not intended as a definition of the limits of the present invention, and wherein;
FIG. 1 is a system configuration diagram of an image forming system;
FIG. 2 is a block diagram of an image forming apparatus;
FIG. 3 is a data configuration diagram of a first irregular-sized sheet information table;
FIG. 4 is a data configuration diagram of a feeding unit information table;
FIG. 5 is a screen example of an irregular sheet size setting screen;
FIG. 6 is a block diagram of a client terminal;
FIG. 7 is a data configuration diagram of an image forming information table;
FIG. 8 is a screen example of a sheet setting screen;
FIG. 9 is a flow chart showing a processing executed in the image forming apparatus in a first embodiment;
FIG. 10 is a flow chart showing a processing executed in the client terminal in the first embodiment;
FIG. 11 is a data configuration diagram of a second irregular-sized sheet information table;
FIG. 12 is a screen example of an irregular sheet size setting screen;
FIG. 13 is a screen example of a sheet setting screen;
FIG. 14 is a flow chart showing a processing executed in the image forming apparatus in a second embodiment;
FIG. 15 is a flow chart showing a processing executed in the client terminal in the second embodiment;
FIG. 16 is a data configuration diagram of a third irregular-sized sheet information table;
FIG. 17 is a screen example of an irregular sheet size setting screen;
FIG. 18 is an image diagram of a drawing data size without a margin amount;
FIG. 19 is an image diagram of a drawing data size with a margin amount of "4.2 mm"
FIG. 20 is a flow chart showing a processing executed in the image forming apparatus in the third embodiment;
FIG. 21 is a flow chart showing a processing executed in the client terminal in the third embodiment;
FIG. 22 is a flow chart showing a processing executed in the image forming apparatus in a fourth embodiment;
FIG. 23 is a flow chart showing a processing executed in the image forming apparatus in a fifth embodiment; and
FIG. 24 is a ladder chart showing a processing executed in an image forming system in a sixth embodiment.

### DETAILED DESCRIPTION OF THE PREFERRED EMBODIMENTS

### [First Embodiment]

Hereinbelow, a first embodiment of an image forming system according to the present invention is described.

### [System configuration of the image forming system]

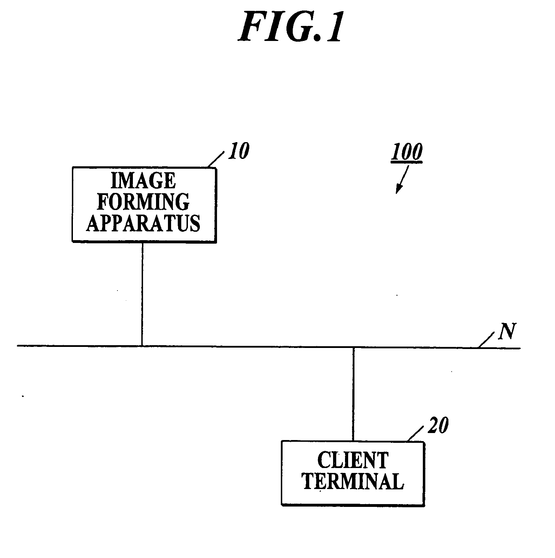

FIG. 1 shows a system configuration of an image forming system 100. As shown in FIG. 1, the image forming system 100 comprises an image forming apparatus 10 and a client terminal 20, and each of the devices is connected so as to be able to perform data communication through a communication network N.

The image forming apparatus 10 is what is called a Multi-Function Peripheral (MFP) comprising a copying function, an image reading function and a printer function, and forms images for sheets based on a print job (a print instruction) transmitted from the client terminal 20 and image forming data and the like read from an image reading section such as a scanner and the like provided in the image forming apparatus 10.

The client terminal 20 is what is called a personal computer, and comprises a function to transmit a print job to the image forming apparatus 10. A printer driver software program (hereinafter sometimes just referred to as a printer driver) is installed in the client terminal 20, and the client terminal 20 generates a print job including data of a print condition applied when an image is formed, and image data and the like, and transmits the print job to the image forming apparatus 10 by using the function of the printer driver.

### [Functional configuration of the image forming apparatus]

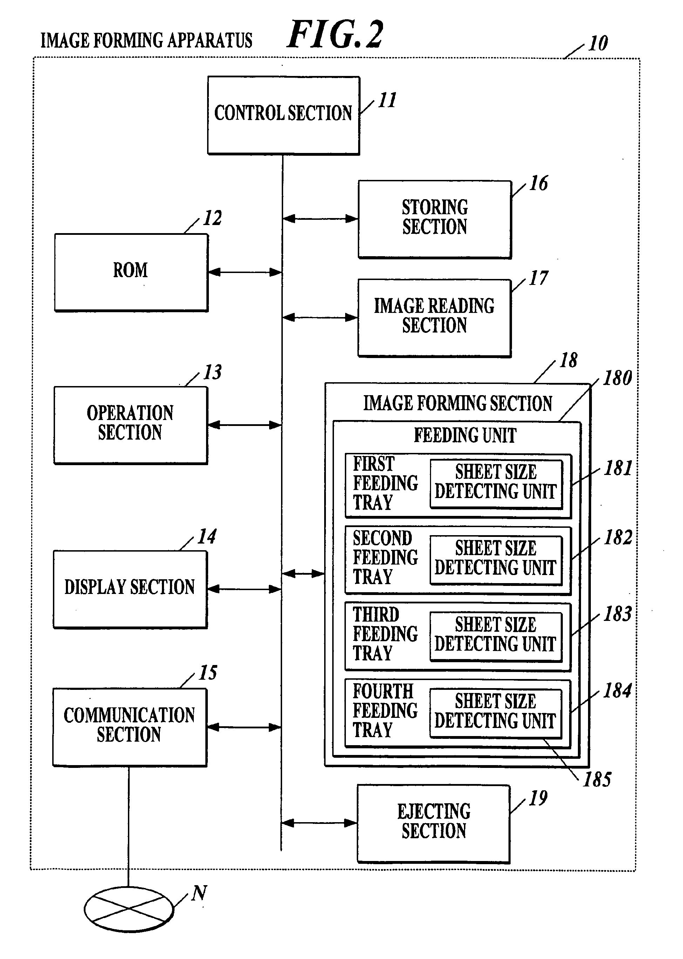

FIG. 2 shows the configuration of the image forming apparatus 10. As shown in FIG. 2, the image forming apparatus 10 comprises a control section 11; a Read Only Memory (ROM) 12; an operation section 13; a display section 14; a communication section 15; a storing section 16; an image reading section 17; an image forming section 18; and an ejecting section 19.

The control section 11 comprises a Central Processing Unit (CPU); and a Random Access Memory (RAM) and the like, and governs and controls the processing operations of each section of the image forming apparatus 10. Specifically, the CPU retrieves various processing programs stored in the ROM 12 and expands the programs in the RAM, to perform various processing in cooperation with the programs, according to an operation signal input from the operation section 13 or an instruction signal received from the communication section 15.

The ROM 12 comprises a nonvolatile semiconductor memory and the like, and stores various processing programs executed in the control section 11, various data and the like. These various programs are stored in a form of a readable program code, and the control section 11 successively executes operations according to the program code.

The operation section 13 comprises various keys such as numeric keys, a start key, a reset key and the like, and outputs a depressed signal of a depressed key to the control section 11. Further, the operation section 13 comprises a touch panel which is formed integrally with the display section 14, and detects a position on the touch panel touched by a finger tip of a user or a touch pen and the like, and outputs a position signal to the control section 11.

The display section 14 comprises a Liquid Crystal Display (LCD) and the like, and is superimposed with the touch panel. The display section 14 displays various screens based on display data input from the control section 11.

The communication 15 comprises a Local Area Network (LAN) adapter; a router; a Terminal Adapter (TA) and the like, and transmits and receives data to and from an external device such as the client terminal 20 and the like which are connected through the communication network N.

The image reading section 17 is what is called a scanner which reads an original image to generate image data, and comprises a platen glass on which an original is placed; and a scanning optical system to scan an original image on the platen glass and to image-form thereof on the CCD image sensor. The image reading section 17 performs an A/D conversion to an image signal generated based on the original image read by the CCD image sensor, and generates an image signal.

The image forming section 18 is a functional section including configuration elements necessary for image forming by using an image forming process such as an electrophotographic method, an electrostatic recording process, a thermal ink-transfer printing and the like. For example, the image forming section 18 comprises a photoconductor; a transfer belt; a fuser; various conveying belts; an electronic circuit; a feeding unit 180 and the like. The image forming section 18 forms an image on a sheet fed from the feeding unit 180, according to an instruction of the control section 11, based on the image data generated by the image reading section 17 or the image data received from the communication section 15, and conveys the sheet to the ejecting section 19.

The feeding unit 180 comprises feeding trays (a first feeding tray 181, a second feeding tray 182, a third feeding tray 183, and a fourth feeding tray 184). The feeding trays 181-184 house sheets respectively. The feeding unit 180 feeds the sheets specified by a user among sheets that differ in sheet types and sizes, from the feeding tray where the sheets are housed, according to the instruction of the control section 11. Further, each of the feeding trays 181-184 comprises a sheet size detecting unit 185 (a detector) to detect the size of the sheets, such as a slider and the like having a sliding resistance. Incidentally, the sheet size detecting units 185 is not used in the first to the fourth embodiments.

The ejecting section 19 comprises an ejection tray, and ejects sheets for which images are formed on the ejection tray, according to the instruction of the control section 11.

The storing section 16 is a storing device such as a hard disk and the like, and stores the image data read by the image reading section 17 and data of the print job and the like received from the client terminal 20 by the communication section 15. Further, the storing section 16 stores a first irregular-sized sheet information table 161 and a feeding unit information table 162.

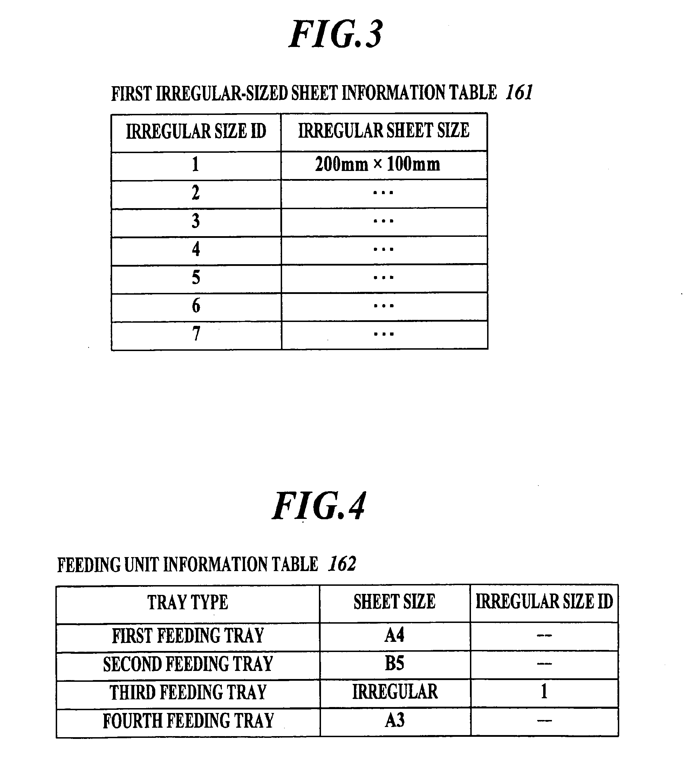

FIG. 3 shows a data configuration of the first irregular-sized sheet information table 161. As shown in FIG. 3, the first irregular-sized sheet information table 161 comprises one or a plurality of records composed of fields of "irregular size ID" and "irregular sheet size".

Here, the "irregular size ID" is a field to identify the irregular sheet size. The term "irregular sheet size" is a field indicating an irregular sheet size which does not conform to the standard such as A4 size, B5 size and the like. The information of the "irregular sheet size" corresponds to "irregular size information".

FIG. 4 shows a data configuration of the feeding unit information table 162. As shown in FIG. 4, the feeding unit information table 162 comprises one or a plurality of records composed of fields of "tray type", "sheet size", and "irregular size ID". Further, one record is a piece of information of one feeding tray. In the present embodiment, the feeding unit 180 comprises four feeding trays (the first feeding tray 181 to the fourth feeding tray 184), and the number of the records is four.

Here, the "tray type" is a field indicating the type of the feeding tray provided at the feeding unit 180. The value of the "tray type" will be "the first feeding tray", "the second feeding tray", "the third feeding tray", and "the fourth feeding tray".

Further, the "sheet size" is a field indicating the size of the sheets housed in the feeding trays. The value of the "sheet size" will be "A4", "B5" and the like when the size is conformed to the standard, and the value of the "sheet size" will be "irregular" when the size is irregular which does not conform to the standard.

Further, "the irregular size ID" is a field to be related with the records of the first irregular-sized sheet information table 161. The value of the "irregular size ID" is only valid at the record in which the value of the "sheet size" is "irregular".

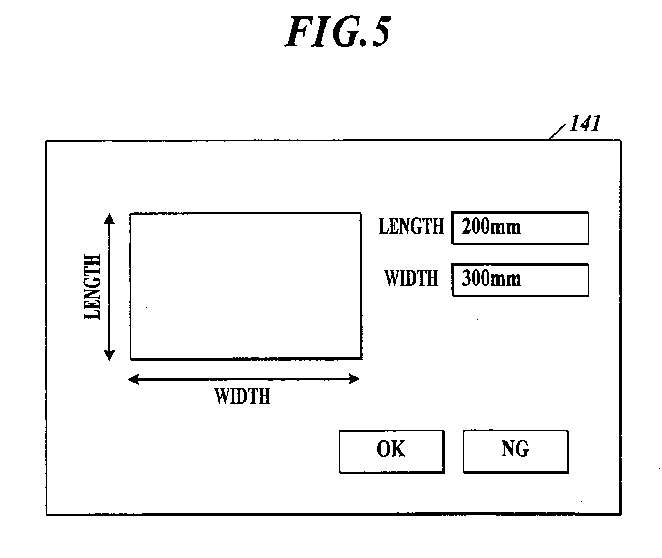

The control section 11 controls the display section 14 to display an irregular sheet size setting screen 141 (see FIG. 5). Subsequently, the control section 11 generates the irregular size information indicating the irregular sheet size, based on the operation signal from the operation section 13 by a user operation. Subsequently, the control section 11 adds a record to the first irregular-sized sheet information table 161 so that the value of the generated irregular size information will be the value of the field "irregular sheet size". Further, the control section 11 transmits the generated irregular size information to the client terminal 20 through the communication section 15.

Specifically, in the irregular sheet size setting screen 141 shown in FIG. 5, a user sets "length: 200 mm, width: 300 mm" and presses an OK button, to generate the irregular size information with a value of "200 mm x 300 mm". Subsequently, the record in which the value of the field "irregular sheet size" is "200 mm x 300 mm" is added to the first irregular-sized sheet information table 161. Further, the irregular size information is transmitted to the client terminal 20.

Further, the control section 11 sets the value of the feeding unit information table 162, based on an operation signal from the operation section 13 by a user operation. Moreover, the control section 11 refers to the first irregular-sized sheet information table 161 and the feeding unit information table 162 to determine the size of the sheets housed in each of the feeding trays 181-184.

The control section 11 receives data of a print job from the client terminal 20 through the communication section 15. Here, the print condition included in the print job includes the sheet size information indicating the size of the sheets for which images are formed as described above.

Subsequently, when the received sheet size information is for an irregular sheet size, the control section 11 searches a record including the "irregular sheet size" field having the same value as the received sheet size information, among the first irregular-sized sheet information table 161. Subsequently, the control section 11 performs the image forming processing to the irregular-sized sheets which correspond to the record having the same value. On the other hand, when the received sheet size information is a sheet size conforming to the standard such as the A4 size, B5 size and the like, the control section 11 performs the image forming processing to the sheets having the size conforming to the standard, specified in an image forming job data.

### [Functional configuration of the client terminal]

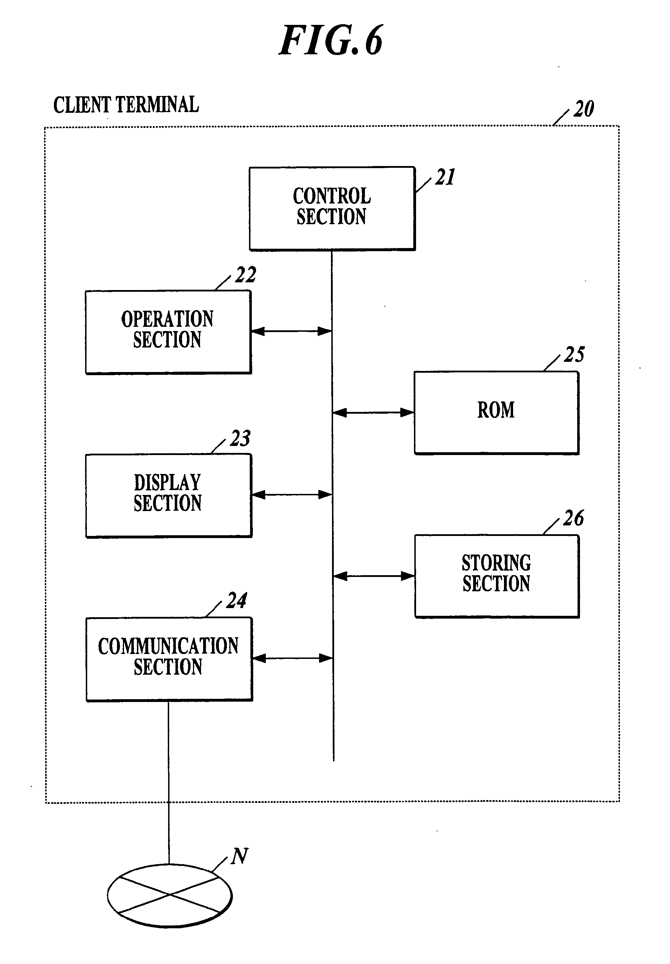

FIG. 6 shows the configuration of the client terminal 20. The client terminal 20 comprises a control section 21; an operation section 22; a display section 23; a communication section 24; a ROM 25; and a storing section 26.

The control section 21 comprises a CPU; a RAM and the like, to integrally control the processing operations of each section of the client terminal 20. Specifically, the CPU retrieves various processing programs stored in the ROM 25 and expands the programs in the RAM, to perform various processing in cooperation with the programs, according to an operation signal input from the operation section 22 or an instruction signal received from the communication section 24.

The operation section 22 comprises a key board comprising cursor keys, numeric input keys, various functional keys and the like; and a pointing device such as a mouse. The operation section 22 outputs the instruction signal input by key operations to the key board and the mouse operations, to the control section 21.

The display section 23 comprises an LCD, and displays an input instruction from the operation section 22, data and the like, according to the instruction of the display signal input from the control section 21.

The communication section 24 comprises a LAN adapter; a router; a TA and the like, and transmits and receives data to and from an external device such as the image forming apparatus 10 which is connected through the communication network N.

The ROM 25 comprises a nonvolatile semiconductor memory and the like, and stores various processing programs executed in the control section 21, various data and the like. These various programs are stored in a form of a readable program code, and the control section 21 successively executes operations according to the program code. The ROM 25 may be either of the forms of a mask ROM and a PROM.

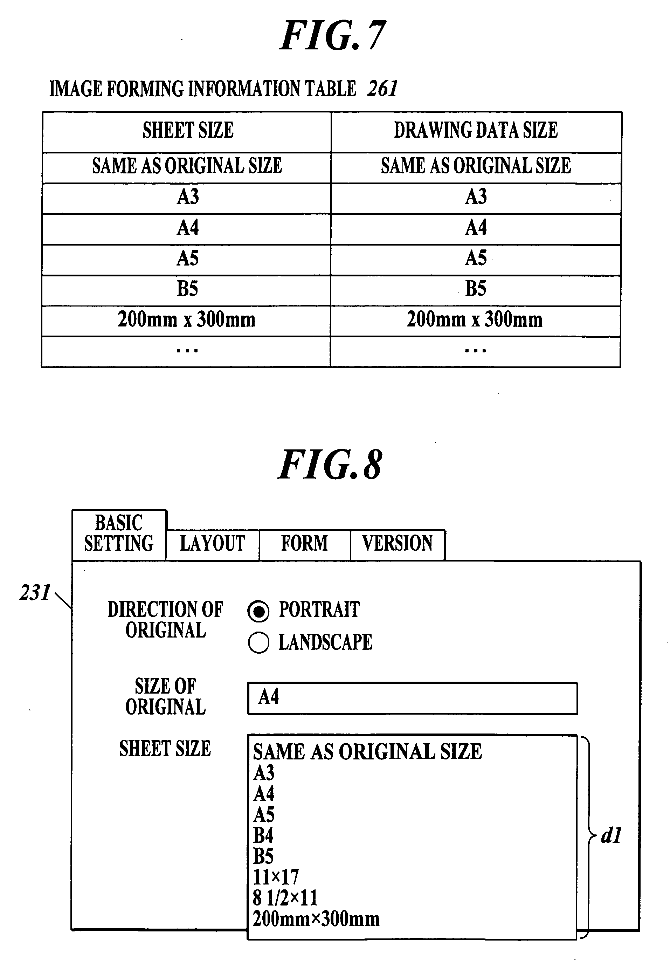

The storing section 26 is a storing device such as a hard disk and the like, and stores various programs, setting data, image data and the like. Further, the storing section 26 stores a printer driver program. The control section 21 retrieves the printer driver program from the storing section 26 and expands the program in the RAM, to generate the print job to be transmitted to the image forming apparatus 10, in cooperation with the program. The storing section 26 stores an image forming information table 261. FIG. 7 shows the data configuration of the image forming information table 261. As shown in FIG. 7, the image forming information table 261 comprises one or a plurality of records composed of fields of "sheet size" and "drawing data size".

Here, the "sheet size" is a field indicating the size of the sheets. The information of the "sheet size" corresponds to the "sheet size information". Further, the "drawing data size" is a field indicating the size of an image to be formed for the sheets. The information of the "drawing data size" corresponds to the "drawing data size information".

When the communication section 24 receives the irregular size information from the image forming apparatus 10, the control section 21 adds a record to the image forming information table 261 so that the value of the irregular size information will be the values of the fields "sheet size" and "drawing data size".

The control section 21 controls the display section 23 to display a basic setting screen 231 in which the setting of sheets is performed (see FIG. 8). Here, the control section 21 retrieves the values of the field "sheet size" of the entire records in the image forming information table 261, to display the values on a sheet size selecting portion d1 of the basic setting screen 231.

Further, the control section 21 sets information of the number of printing copies, a printing range and the like, through the operation section 22 by a user operation from a layout setting screen (not shown).

Moreover, when any one of the values in the sheet size selecting portion d1 is selected and an operation signal to perform printing is input, through the operation section 22 by a user operation, the control section 21 refers to the image forming information table 261, and converts the image data to be the print object to Page Description Language (PDL) data such as post script, PCL and the like, so that the value of the "drawing data size" corresponding to the selected "sheet size" will be the drawing data size. Incidentally, when a form image to be synthesized is selected by a user operation from a form setting screen, the PDL data is generated based on the image data to be the print object and the data of the form image.

Subsequently, the control section 21 generates print condition data including the sheet size information of the "sheet size" selected in the sheet size selecting portion d1, information of the set number of printing copies, printing range and the like, and various information specified by a user from the layout setting screen. Subsequently, the control section 21 generates print job data based on the generated print condition data and the above described converted PDL data, and controls the communication section 24 to transmit the print job data to the image forming apparatus 10.

### [Specific operations of each device]

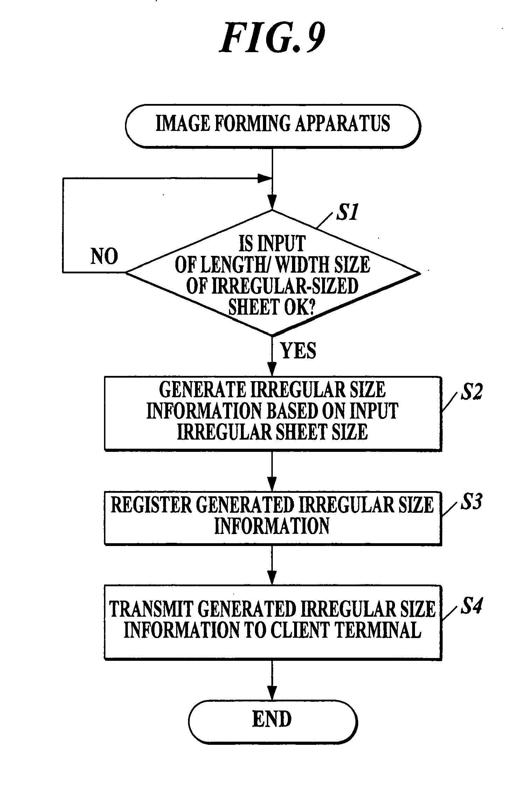

Next, specific operations in the image forming apparatus 10 will be described. FIG. 9 is a flow chart showing the processing executed in the image forming apparatus 10. A user sets sheets of an irregular size to a feeding tray of the feeding unit 180, refers to the irregular sheet size setting screen 141 displayed on the display section 14, performs a user operation to set an irregular size (length/ width) from the operation section 13 and the like.

Subsequently, as shown in FIG. 9, when an operation signal to set the value of the length/width size of the irregular-sized sheets (step S1; Yes), the irregular size information having the value of the size set on the irregular sheet size setting screen 141 is generated by the control section 11 (step S2).

Subsequently, the irregular size information is registered in the first irregular-sized sheet information table 161 by the control section 11 (step S3). Further, the irregular size information is transmitted to the client terminal 20 through the communication section 15 by the control section 11 (step S4).

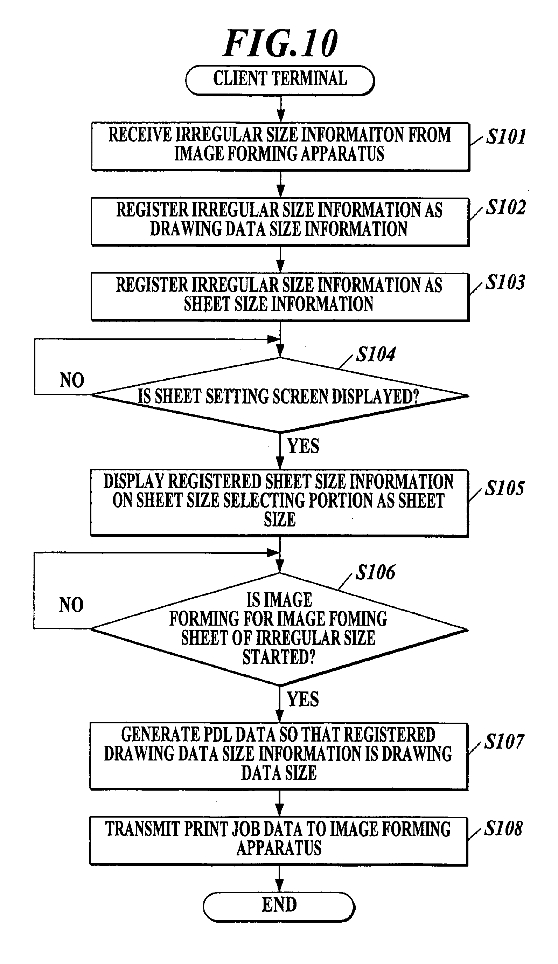

Next, specific operations in the client terminal 20 will be described. FIG. 10 is a flow chart showing the processing executed by the client terminal 20. As shown in FIG. 10, when the irregular size information is received from the image forming apparatus 10 by the communication section 24, (step S101), the irregular size information is registered in the image forming information table 261 as the drawing data size information by the control section 21 (step S102). Further, the irregular size information is registered in the image forming information table 261 as the sheet size information (step S103).

Subsequently, in a case where the printer driver is activated, when the basic setting screen 231 is displayed on the display section 23 by a user operation (step S104; Yes), the sheet size information registered in the image forming information table 261 is displayed on the sheet size selecting portion d1 of the basic setting screen 231 as the sheet size (step S105).

Subsequently, when a user operation is performed so that the sheet size based on the irregular size information is selected to execute the image forming for sheets of the irregular size (step S106; Yes), the image forming information table 261 is referred to and the PDL data with the drawing data size of "drawing data size" corresponding to the "sheet size" is generated by the control section 21 (step S107). Subsequently, the data of the print job is generated based on the generated image data and the like, and the generated print job data is transmitted to the image forming apparatus 10 (step S108). Subsequently, the image forming is performed for the sheets of the irregular size based on the received print job data in the image forming apparatus 10.

As described above, according to the first embodiment, the image forming apparatus 10 registers the set irregular sheet size to the first irregular-sized sheet information table 161 as the irregular size information. Subsequently, the image forming apparatus 10 transmits the registered irregular size information to the client terminal 20. When the irregular size information is received, the client terminal 20 registers the irregular size information in the image forming information table 261 as the drawing data size information. Further, the client terminal 20 registers the irregular size information in the image forming information table 261 as the sheet size information.

Thus, a user performs the registration of the irregular sheet size only for the image forming apparatus 10, and the trouble of similarly registering the irregular sheet size for the client terminal 20 can be omitted.

### [Second Embodiment]

Hereinbelow, the second embodiment of the image forming system according to the present invention will be described. Incidentally, points which differ from those in the first embodiment will be mainly described.

### [Functional configuration of the image forming apparatus]

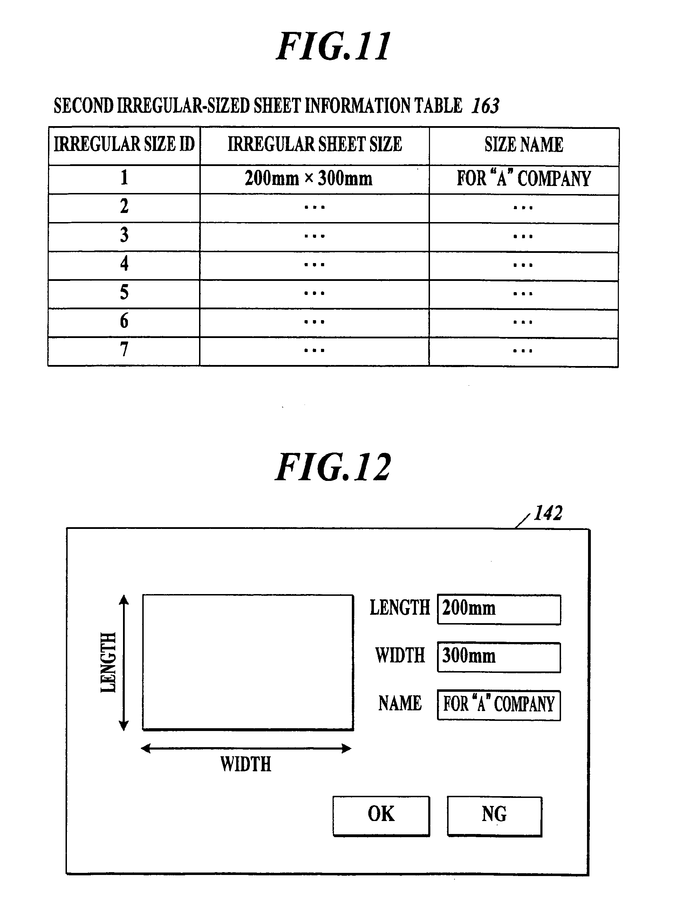

The storing section 16 of the image forming apparatus 10 stores a second irregular-sized sheet information table 163. FIG. 11 shows the data configuration of the second irregular-sized sheet information table 163. As shown in FIG. 11, the second irregular-sized sheet information table 163 comprises one or a plurality of records composed of fields of "irregular size ID", "irregular sheet size", and "size name".

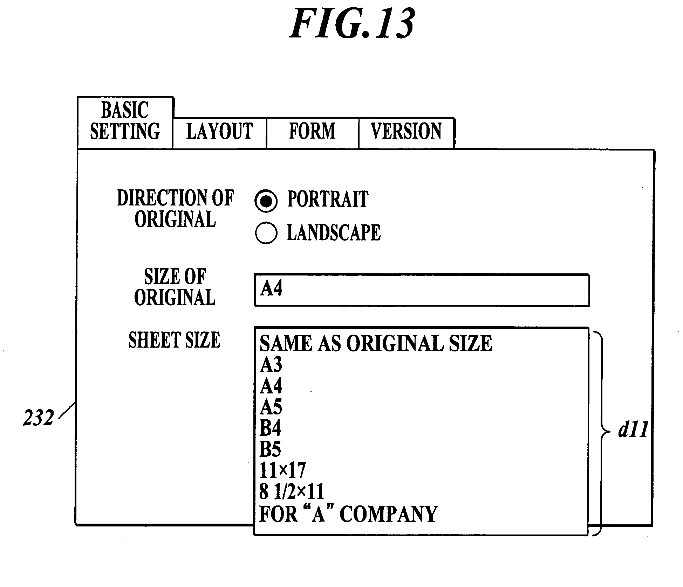

Here, the "size name" is a field indicating the name of the irregular sheet size. The value of the "size name" (a character string) is displayed on a sheet size selecting portion d11 of a basic setting screen 232 (see FIG. 13) displayed on the display section 23 of the client terminal 20. The information of the "size name" corresponds to "name information".

The control section 11 of the image forming apparatus 10 controls the display section 14 of the image forming apparatus 10 to display an irregular sheet size setting screen 142 (see FIG. 12). Subsequently, the control section 11 generates the irregular size information and the name information indicating the character string displayed on the sheet size selecting portion d11 of the basic setting screen 232, based on an operation signal from the operation section 13 of the image forming apparatus 10 by a user operation.

Subsequently, the control section 11 adds the record to the second irregular-sized sheet information table 163 so that the value of the generated irregular size information will be the value of the field "irregular sheet size", and the value of the generated name information will be the value of the field "size name". Further, the control section 11 transmits the generated irregular size information and the name information to the client terminal 20 through the communication section 15.

Specifically, in the irregular sheet size setting screen 142 shown in FIG. 12, a user sets "length: 200 mm, width: 300 mm", "name: for company A" and presses an OK button to generate the irregular size information with the value of "200 mm x 300 mm" and the name information with the value of "for company A". Subsequently, the record in which the value of the field "irregular sheet size" is "200 mm x 300 mm" and the value of the field "size name" is "for company A", is added to the second irregular-sized sheet information table 163. Further, the irregular size information and the name information are transmitted to the client terminal 20.

The control section 11 receives the print job data from the client terminal 20 through the communication section 15. Subsequently, when the received sheet size information corresponds to an irregular sheet size, the control section 11 searches a record including the "size name" field having the same value as the received sheet size information, among the second irregular-sized sheet information table 163. Subsequently, the control section 11 performs the image forming processing for the sheets of the irregular size, which correspond to the record having the same value. On the other hand, when the received sheet size information corresponds to a sheet size conforming to the standard such as the A4 size, B5 size and the like, the control section 11 performs the image forming processing for the sheets having the size conforming to the standard, specified in the image forming job data.

### [Functional configuration of the client terminal]

When the communication section 24 of the client terminal 20 receives the irregular size information and the name information from the image forming apparatus 10, the control section 21 of the client terminal 20 adds a record to the image forming information table 261 so that the value of the name information will be the value of the field "sheet size", and the value of the irregular size information will be the value of the field "drawing data size".

The control section 21 controls the display section 23 of the client terminal 20 to display the basic setting screen 232 (see FIG. 13). Here, the control section 21 retrieves the values of the field "sheet size" of the entire records in the image forming information table 261, to display the values on the sheet size selecting portion d11 of the basic setting screen 232. Here, "for company A" is displayed on the portion where "200 mm x 300 mm" was displayed in the first embodiment.

When any one of the values in the sheet size selecting portion d11 is selected and an operation signal to perform the image forming is input, through the operation section 22 by a user operation, the control section 21 retrieves the image data to be the image forming object from the storing section 26. Subsequently, the control section 21 refers to the image forming information table 261, and converts the image data to be the print object to the PDL data, so that the value of the "drawing data size" corresponding to the selected "sheet size" will be the drawing data size.

Subsequently, the control section 21 generates the print condition data including the sheet size information of the "sheet size" selected in the sheet size selecting portion d11, the information of the set number of printing copies, printing range and the like, and various information specified by a user from the layout setting screen. Subsequently, the control section 21 generates the print job data based on the generated print condition data and the above described converted PDL data, and controls the communication section 24 to transmit the print job data to the image forming apparatus 10.

### [Specific operations of each device]

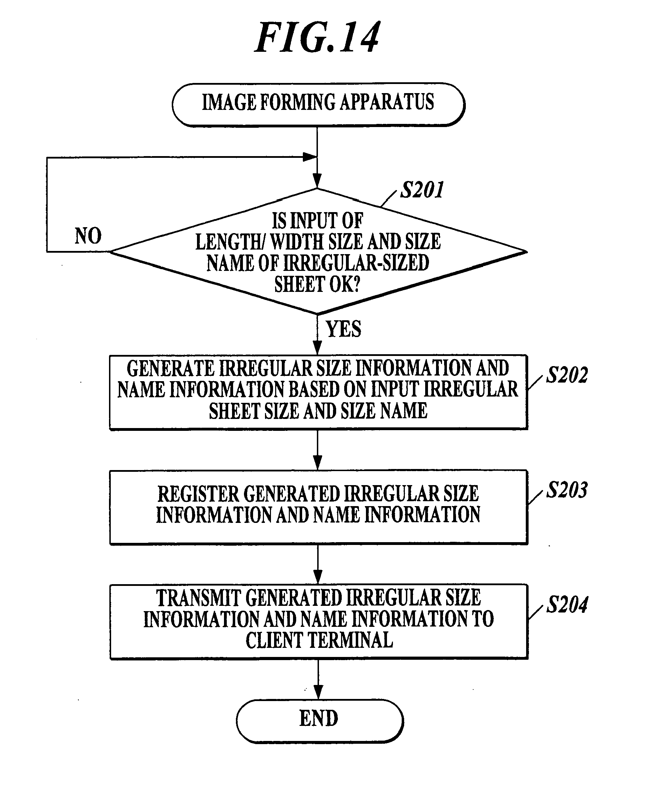

Next, specific operations in the image forming apparatus 10 will be described. FIG. 14 is a flow chart showing the processing executed in the image forming apparatus 10. A user sets sheets of an irregular size to a feeding tray of the feeding unit 180, refers to the irregular sheet size setting screen 142 displayed in the display section 14, performs a user operation to set the irregular sheet size (length/ width) and the size name from the operation section 13 and the like.

Subsequently, as shown in FIG. 14, when an operation signal to set the value of the length/width size of the irregular-sized sheets and the value of the size name (step S201; Yes), the irregular size information and the name information having the values set on the irregular sheet size setting screen 142 are generated by the control section 11 (step S202).

Subsequently, the irregular size information and the name information are registered in the second irregular-sized sheet information table 163 by the control section 11 (step S203). Further, the irregular size information and the name information are transmitted to the client terminal 20 through the communication section 15 by the control section 11 (step S204).

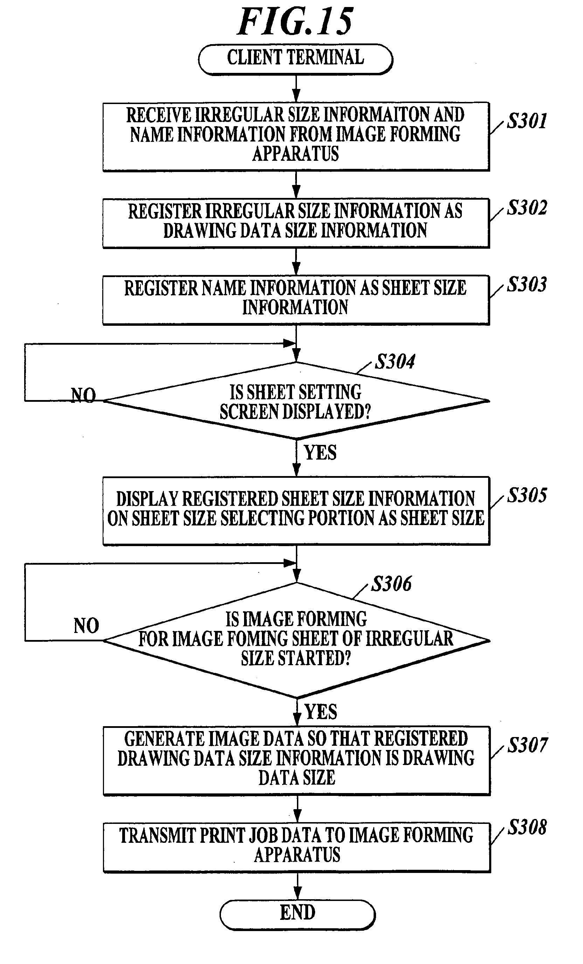

Next, specific operations in the client terminal 20 will be described. FIG. 15 is a flow chart showing the processing executed by the client terminal 20. As shown in FIG. 15, when the irregular size information and the name information are received from the image forming apparatus 10 through the communication section 24 (step S301), the irregular size information is registered in the image forming information table 261 as the drawing data size information by the control section 21 (step S302). Further, the name information is registered in the image forming information table 261 as the sheet size information (step S303).

Subsequently, in a case where the printer driver is activated, when the basic setting screen 232 is displayed on the display section 23 by a user operation (step S304; Yes), the sheet size information registered in the image forming information table 261 is displayed on the sheet size selecting portion d11 of the basic setting screen 232 as the sheet size (step S305). Here, the value corresponding to the irregular sheet size is displayed by names such as "for company A" and the like, on the sheet size selecting portion d11.

Subsequently, when a user operation is performed so that the sheet size based on the irregular size information is selected to execute the image forming for sheets of the irregular size (step S306; Yes), the image forming information table 261 is referred to and the PDL data with the drawing data size of "drawing data size" corresponding to the "sheet size", is generated by the control section 21 (step S307). Subsequently, the data of the print job is generated based on the generated image data and the like, and the generated print job data is transmitted to the image forming apparatus 10 (step S308). Subsequently, the image forming is performed for the sheets of the irregular size based on the received print job data in the image forming apparatus 10.

As described above, according to the second embodiment, the image forming apparatus 10 registers the names corresponding to the set irregular sheet sizes in the second irregular-sized sheet information table 163 as the name information with the irregular size information. Subsequently, the image forming apparatus 10 transmits the registered name information to the client terminal 20 with the irregular size information. When the irregular size information and the name information are received, the client terminal 20 registers the irregular size information in the image forming information table 261 as the drawing data size information. Further, the client terminal 20 registers the name information in the image forming information table 261 as the sheet size information. Subsequently, the client terminal 20 displays the name of the sheet size set in the image forming apparatus 10 on the display section 23.

Thus, not only there is a similar benefit to the first embodiment, but also the name specified by a user can be displayed as the sheet size information in the client terminal 20, and the usability of the user is improved.

### [Third Embodiment]

Hereinbelow, the third embodiment of the image forming system according to the present invention will be described. Incidentally, points which differ from those in the second embodiment will be mainly described.

### [Functional configuration of the image forming apparatus]

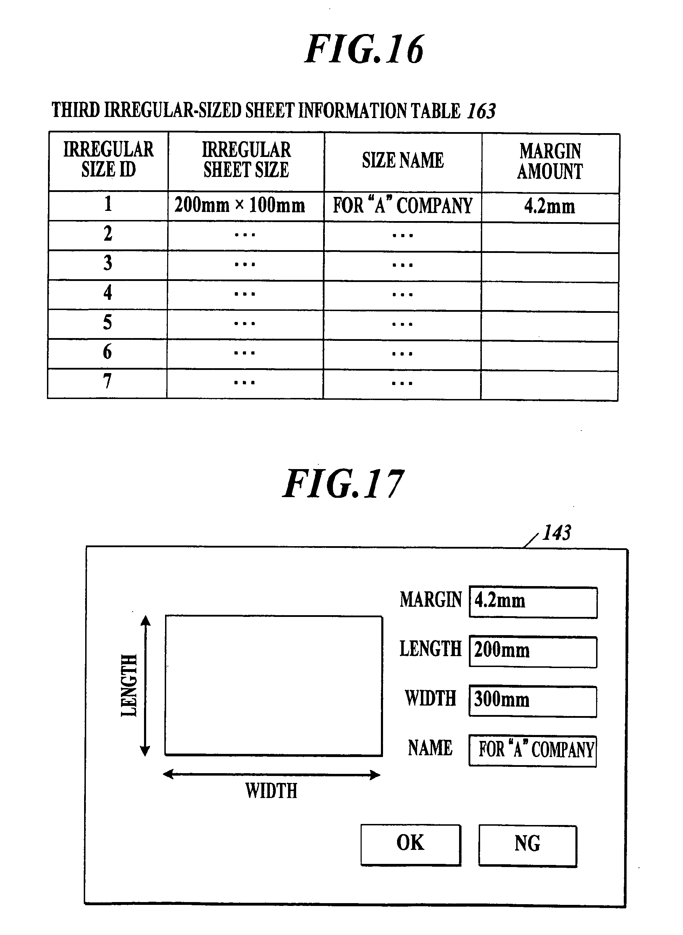

The storing section 16 of the image forming apparatus 10 stores a third irregular-sized sheet information table 164. FIG. 16 shows the data configuration of the third irregular-sized sheet information table 164. As shown in FIG. 16, the third irregular-sized sheet information table 164 comprises one or a plurality of records composed of fields of "irregular size ID", "irregular sheet size", "size name" and "margin amount".

Here, the "margin amount" is a field indicating the amount of a margin when an image is formed for sheets. The information of the "margin amount" corresponds to "margin amount information". Further, the irregular size information, the name information and the margin amount information are integrally referred to as "sheet information".

The control section 11 of the image forming apparatus 10 instructs the display section 14 of the image forming apparatus 10 to display an irregular sheet size setting screen 143 (see FIG. 17). Subsequently, the control section 11 generates the irregular size information, the name information and margin amount information indicating the amount of the margin when an image is formed for sheets, based on the operation signal from the operation section 13 of the image forming apparatus 10 by a user operation.

Subsequently, the control section 11 adds a record to the third irregular-sized sheet information table 164 so that the value of the generated irregular size information will be the value of the field "irregular sheet size", the value of the generated name information will be the value of the field "size name", and the value of the generated margin amount information will be the value of the field "margin amount". Further, the control section 11 transmits the generated irregular size information, name information and margin amount information to the client terminal 20 through the communication section 15.

Specifically, in the irregular sheet size setting screen 143 shown in FIG. 17, a user sets "margin: 4.2 mm", "length: 200 mm, width: 300 mm" and "name: for company A", and presses an OK button to generate the irregular size information with the value of "200 mm x 300 mm", the name information with the value of "for company A" and the margin amount information with the value of "4.2 mm". Subsequently, the record in which the value of the field "irregular sheet size" is "200 mm x 300 mm", the value of the field "size name" is "for company A" and the value of the field "margin amount" is "4.2 mm", is added to the third irregular-sized sheet information table 164. Further, the irregular size information, the name information and the margin amount information are transmitted to the client terminal 20.

The control section 11 receives the print job data from the client terminal 20 through the communication section 15. Subsequently, when the received sheet size information corresponds to an irregular sheet size, the control section 11 searches a record including the "size name" field having the same value as the received sheet size information, among the third irregular-sized sheet information table 164. Subsequently, the control section 11 performs the image forming processing for sheets of irregular size which correspond to the record having the same value. On the other hand, when the received sheet size information corresponds to a sheet size conforming to the standard such as the A4 size, B5 size and the like, the control section 11 performs the image forming processing for the sheets having the size conforming to the standard, specified in the image forming job data.

### [Functional configuration of the client terminal]

When the communication section 24 of the client terminal 20 receives the irregular size information, the name information and the margin amount information from the image forming apparatus 10, the control section 21 of the client terminal 20 adds a record to the image forming information table 261 so that the value of the name information will be the value of the field "sheet size", and by calculating the drawing data size based on the irregular size information and the margin amount information, the calculated drawing data size will be the value of the field "drawing data size".

Specifically, when the value of the irregular size information is "length: 200 mm, width: 300 mm" and the value of the margin amount information is "4.2 mm", the value of the drawing data size information is "length: 191.6 mm, width: 291.6 mm" ("length: 200 mm - (4.2 mm + 4.2 mm), width: 300 mm - (4.2 mm + 4.2 mm)").

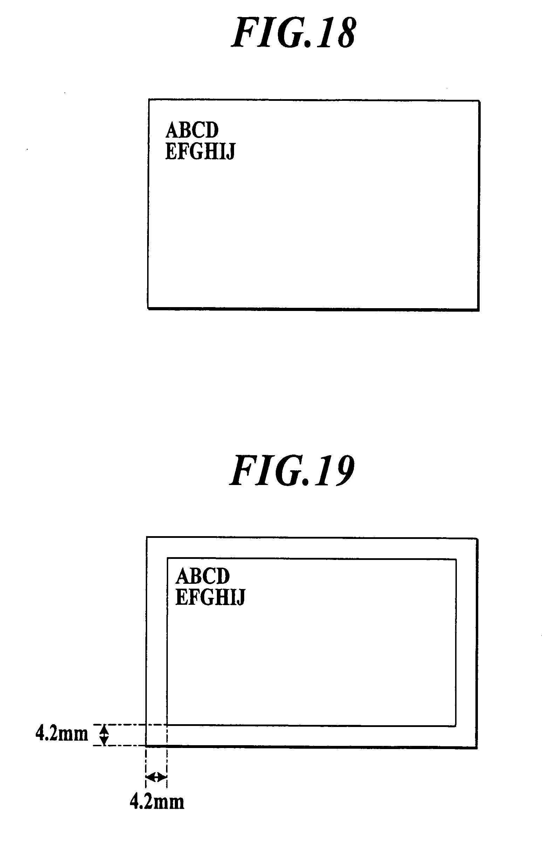

FIGS. 18 and 19 show image diagrams of the drawing data size. FIG. 18 is the image diagram of the drawing data size without the margin amount. Further, FIG. 19 is the image diagram of the drawing data size with the margin amount of "4.2 mm".

The control section 21 instructs the display section 23 of the client terminal 20 to display the basic setting screen 232 (see FIG. 13).

Further, when any one of the values in the sheet size selecting portion d11 is selected and an operation signal to perform the image forming is input, through the operation section 22 by a user operation, the control section 21 refers to the image forming information table 261, and converts the image data to be the print object to the PDL data, so that the value of the "drawing data size" corresponding to the selected "sheet size" will be the drawing data size.

Here, when the sheet size "for company A" is selected by a user operation, the drawing data size is "length: 191.6 mm, width: 291.6 mm" in which the margin amount is taken into account.

### [Specific operations in each device]

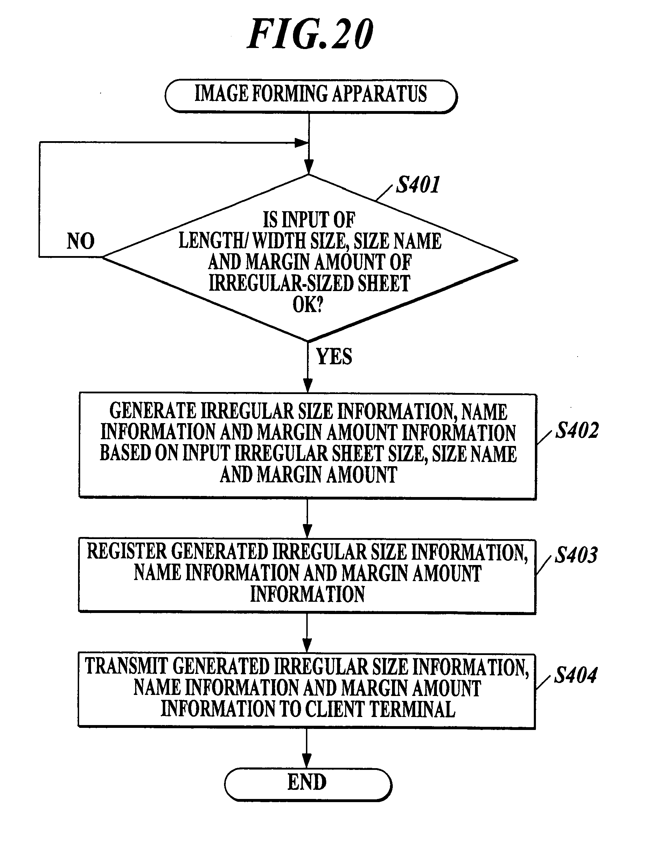

Next, specific operations in the image forming apparatus 10 will be described. FIG. 20 is a flow chart showing the processing executed in the image forming apparatus 10. A user sets sheets of an irregular size to a feeding tray of the feeding unit 180, refers to the irregular sheet size setting screen 143 displayed in the display section 14, performs a user operation and the like to set the irregular sheet size (length/ width), the size name and the margin amount from the operation section 13.

Subsequently, as shown in FIG. 20, when an operation signal to set the value of the length/width size of the irregular-sized sheets, the value of the size name and the value of the margin amount (step S401; Yes), the irregular size information, the name information and the margin amount information having the values set on the irregular sheet size setting screen 143 are generated by the control section 11 (step S402).

Subsequently, the irregular size information, the name information and the margin amount information are registered in the third irregular-sized sheet information table 164 (step S403). Further, the irregular size information, the name information and the margin amount information are transmitted to the client terminal 20 through the communication section 15 by the control section 11 (step S404).

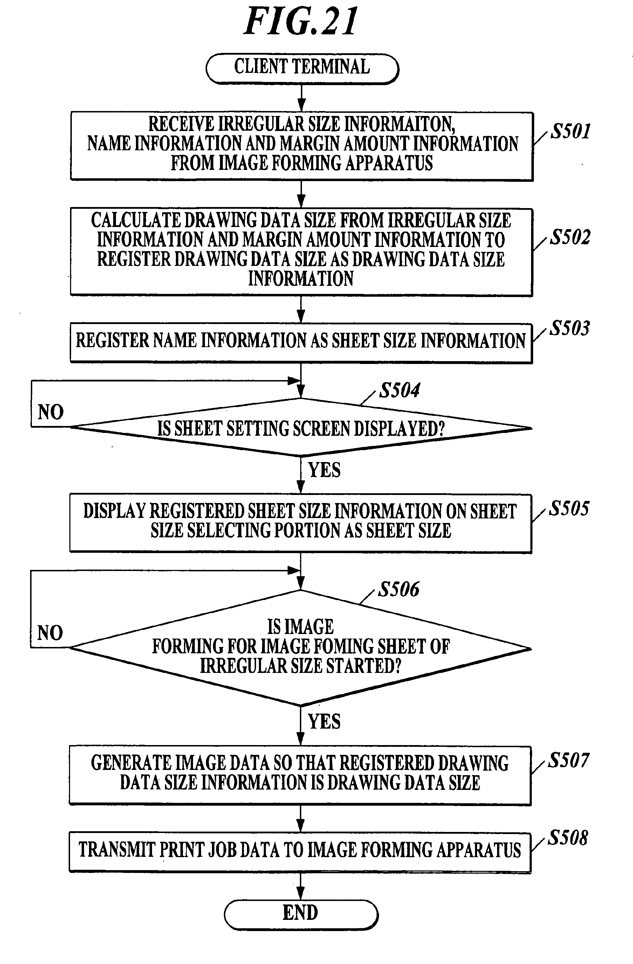

Next, specific operations in the client terminal 20 will be described. FIG. 21 is a flow chart showing the processing executed in the client terminal 20. As shown in FIG. 21, when the irregular size information, the name information and the margin amount information are received from the image forming apparatus 10 by the communication section 24 (step S501), the drawing data is calculated based on the irregular size information and the margin amount information, and the calculated drawing data is registered in the image forming information table 261 as the drawing data size information by the control section 21 (step S502). Further, the name information is registered in the image forming information table 261 as the sheet size information (step S503).

Subsequently, in a case where the printer driver is activated, when the basic setting screen 232 is displayed on the display section 23 by a user operation (step S504; Yes), the sheet size information registered in the image forming information table 261 is displayed on the sheet size selecting portion d11 of the basic setting screen 232 as the sheet size (step S505).

Subsequently, when a user operation is performed so that the sheet size based on the irregular size information is selected to execute the image forming for sheets of the irregular size (step S506; Yes), the image forming information table 261 is referred to and the PDL data with the drawing data size of the "drawing data size" corresponding to the "sheet size" is generated by the control section 21 (step S507). Subsequently, the print job data is generated based on the generated image data and the like, and the generated print job data is transmitted to the image forming apparatus 10 (step S508). Subsequently, the image forming is performed for the sheets of the irregular size based on the received print job data in the image forming apparatus 10.

As described above, according to the third embodiment, the image forming apparatus 10 registers the name and the margin amount corresponding to the set irregular sheet size in the third irregular-sized sheet information table 164 as the name information and the margin amount information, respectively, with the irregular size information. Subsequently, the image forming apparatus 10 transmits the registered irregular size information, name information and the margin amount information to the client terminal 20. When the irregular size information, the name information and the margin amount information are received, the drawing data is calculated based on the irregular size information and the margin amount information, and the calculated drawing data is registered in the image forming information table 261 as the drawing data size information, by the client terminal 20. Further, the name information is registered in the image forming information table 261 as the sheet size information.

Thus, not only there is a similar benefit to the second embodiment, but also a user performs the setting and the registration of the margin amount only for the image forming apparatus 10, and the trouble of setting the margin amount can be reduced.

Incidentally, the value of the margin amount information is "4.2 mm" and the margin amount is applied to all of the upper end, lower end, right end and left end in the present embodiment. However, there may be a case in which there are four values composed of the margin amount of the upper end, the margin amount of the lower end, the margin amount of the right end and the margin amount of the left end, such as "upper end: 3.2 mm, lower end: 2.6 mm, right end: 1.3 mm, left end: 5.0 mm". In this case, when the value of the irregular size information is "length: 200 mm, width: 300 mm", the value of the drawing data size information is calculated to be "length: 194.2 mm, width: 293.7 mm" ("length: 200 mm - (3.2 mm + 2.6 mm), width: 300 mm - (1.3 mm + 5.0 mm)"), by the control section 21.

### [Fourth Embodiment]

Hereinbelow, the fourth embodiment of the image forming system according to the present invention will be described. Incidentally, points which differ from those in the first embodiment will be mainly described.

### [Functional configuration of the image forming apparatus]

The image reading section 17 of the image forming apparatus 10 scans an image on the sheets to generate image data. Subsequently, the image reading section 17 outputs the generated image data to the control section 11.

The control section 11 is input with the image data from the image reading section 17, and calculates the irregular sheet size based on the image data. Specifically, the control section 11 identifies a sheet range based on the image data, to calculate the irregular sheet size based on the identified range.

Subsequently, when an operation signal is input so that the irregular sheet size is registered as the irregular size information from the operation section 13 by a user operation (which is pressing down a not shown reading registration button displayed on the display section 14), the control section 11 generates the irregular size information based on the calculated irregular sheet size.

Subsequently, the control section 11 adds a record to the first irregular-sized sheet information table 161 so that the value of the generated irregular size information will be the value of the field "irregular sheet size". Further, the control section 11 transmits the generated irregular size information to the client terminal 20 through the communication 15.

### [Specific operations of the image forming apparatus]

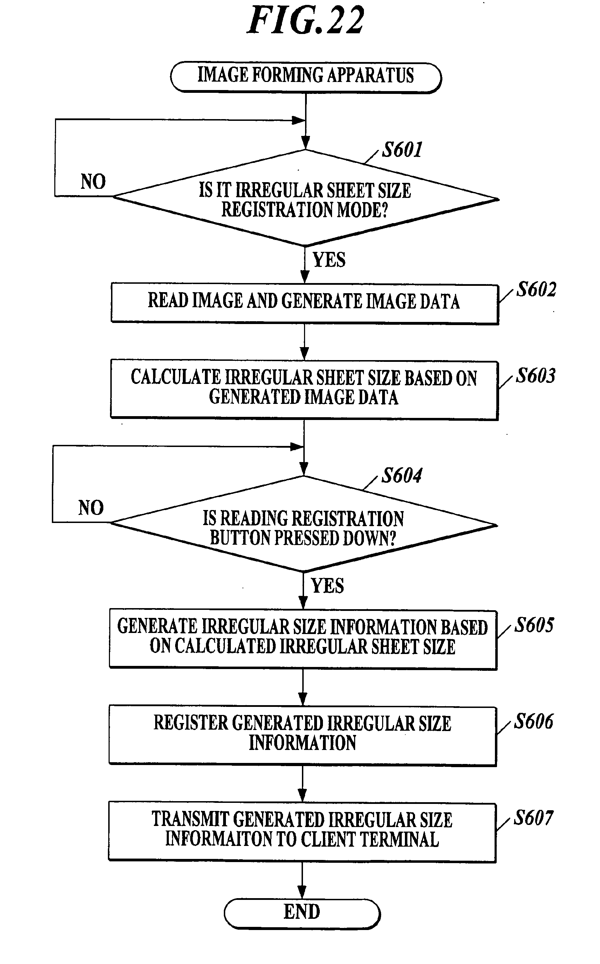

Next, specific operations in the image forming apparatus 10 will be described. FIG. 22 is a flow chart showing the processing executed in the image forming apparatus 10. A user sets sheets of an irregular size to the image reading section 17, and performs a setting of whether to choose an irregular sheet size registration mode or not from the operation section 13 by a user operation.

Subsequently, as shown in FIG. 22, when it is determined to be the irregular sheet size registration mode by the control section 11 (step S601; Yes), and an operation signal is input to scan an image of the sheets, the image data is generated by the image reading section 17 (step S602). Subsequently, the irregular sheet size is specified based on the generated image data by the control section 11 (step S603).

Subsequently, when the reading registration button is pressed down (step S604; Yes), the irregular size information is generated based on the specified irregular sheet size by the control section 11 (step S605). Subsequently, the irregular size information is registered in the first irregular-sized sheet information table 161 by the control section 11 (step S606). Further, the irregular size information is transmitted to the client terminal 20 through the communication section 15 by the control section 11 (step S607).

Further, in step S601, when it is not determined to be the irregular sheet size registration mode by the control section 11 (step S601; No), and the operation signal is input to scan an image of the sheets, the image data is generated by the image reading section 17, and an image forming processing is performed based on the generated image data in the image forming apparatus 10. Here, the control section 11 does not perform the processing of step S603-step S607.

As described above, according to the fourth embodiment, the image reading section 17 of the image forming apparatus 10 scans an image on the sheets to generate image data. Subsequently, the image forming apparatus 10 sets the irregular sheet size based on the image data, to register the irregular sheet size in the first irregular-sized sheet information table 161 as the irregular size information. Thus, a user need not perform the setting of the irregular sheet size by a manual input for the image forming apparatus 10.

### [Fifth Embodiment]

Hereinbelow, the fifth embodiment of the image forming system according to the present invention will be described. Incidentally, points which differ from those in the first embodiment will be mainly described.

### [Functional configuration of the image forming apparatus]

The sheet size detecting units 185 which are provided in each of the feeding trays 181-184 of the feeding unit 180 of the image forming apparatus 10 detect the size of the sheets (irregular sheet size), housed in the feeding trays. For example, the sheet size detecting unit 185 is a slider provided with a sliding resistance, and the slider is shifted according to the sheet size. An electric signal according to the position of the slider is output by the sliding resistance, and the sheet size detecting unit 185 performs the A/D conversion for the electric signal to output the converted signal to the control section 11.

The control section 11 specifies the size of the irregular-sized sheets housed in the feeding trays according to the data output from the sheet size detecting unit 185, by a user operation (which is pressing down a not shown slider registration button displayed on the display section 14 to specify either of the feeding trays 181-184). Subsequently, the control section 11 generates the irregular size information based on the specified irregular sheet size. Subsequently, the control section 11 adds a record in the first irregular-sized sheet information table 161 so that the value of the generated irregular size information will be the value of the field "irregular sheet size". Further, the control section 11 transmits the generated irregular size information to the client terminal 20 through the communication section 15. [Specific operations of the image forming apparatus]

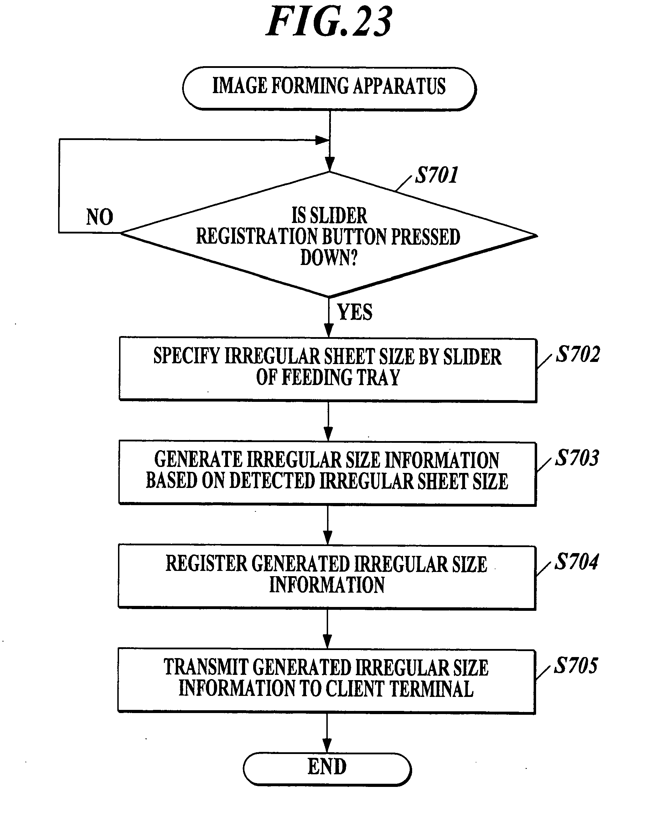

Next, specific operations in the image forming apparatus 10 will be explained. FIG. 23 is a flow chart showing the processing executed in the image forming apparatus 10. A user sets sheets of an irregular size to a feeding tray of the feeding unit 180, and presses down the slider registration button.

When the slider registration button is pressed down (step S701; Yes), the control section 11 specifies the size of the sheets (irregular sheet size), housed in the feeding trays based on the data obtained from the sheet size detecting unit 185 (step S702). Subsequently, the control section 11 generates the irregular size information based on the specified irregular sheet size (step S703). Subsequently, the control section 11 registers the irregular size information in the first irregular-sized sheet information table 161 (step S704). Further, the control section 11 transmits the irregular size information to the client terminal 20 through the communication section 15 (step S705).

As described above, according to the fifth embodiment, the sheet size detecting unit 185 of the image forming apparatus 10 detects the sheet size of the sheets housed in the feeding trays. Subsequently, the detected sheet size is registered in the first irregular-sized sheet information table 161 as the irregular size information. Thus, a user need not perform the setting of the irregular sheet size by a manual input for the image forming apparatus 10.

### [Sixth Embodiment]

Hereinbelow, the sixth embodiment of the image forming system according to the present invention will be described. Incidentally, points which differ from those in the first embodiment will be mainly described.

### [Functional configuration of the image forming apparatus]

The control section 11 of the image forming apparatus 10 instructs the display section 14 of the image forming apparatus 10 to display the irregular sheet size setting screen 141 (see FIG. 5). Subsequently, the control section 11 generates the irregular size information indicating the size of the irregular-sized sheets based on an operation signal from the operation section 13 by a user operation. Subsequently, the control section 11 adds a record in the first irregular-sized sheet information table 161 so that the value of the generated irregular size information will be the value of the field "irregular sheet size".

When an irregular size information obtaining request is received from the client terminal 20 by the communication section 15, the control section 11 transmits the generated irregular size information to the client terminal 20.

### [Functional configuration of the client terminal]

When an operation signal is input to activate the printer driver through the operation section 22 by a user operation, the control section 21 of the client terminal 20 controls the communication section 24 to transmit the irregular size information obtaining request to the image forming apparatus 10.

Incidentally, the control section 21 may also control the communication section 24 to transmit the irregular size information obtaining request to the image forming apparatus 10 when the client terminal 20 is activated.

### [Specific operations of each device]

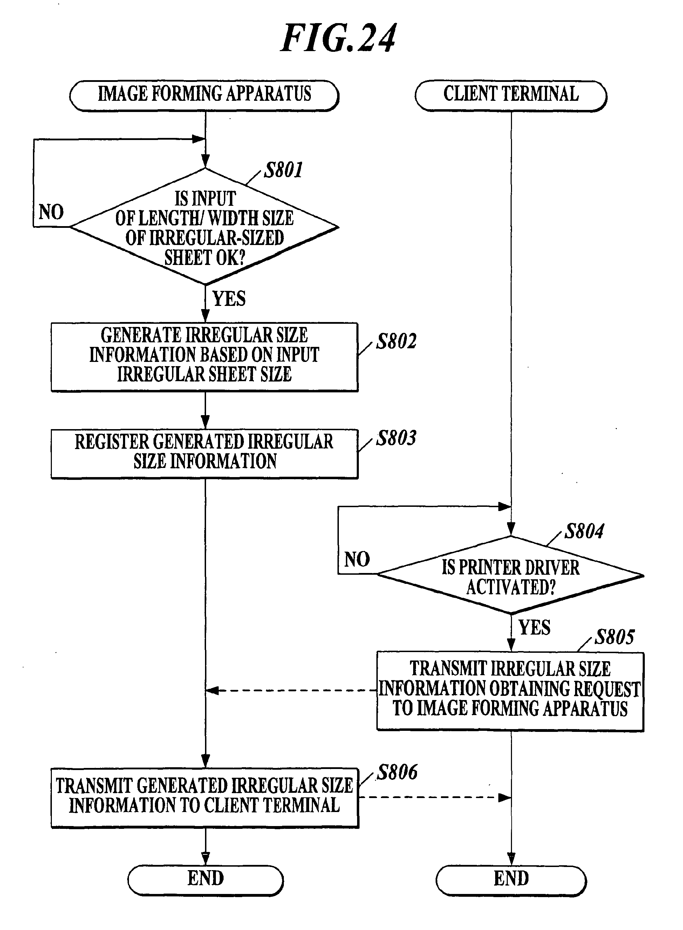

Next, the operations in the image forming system 100 will be described. FIG. 24 is a ladder chart showing the operations executed in the image forming system 100.

A user sets sheets of an irregular size to a feeding tray of the feeding unit 180 of the image forming apparatus 10, refers to the irregular sheet size setting screen 141, performs a user operation to set the irregular sheet size (length/ width), and the like.

When the value of the length/ width size of the irregular-sized sheets is set (step S801; Yes), the image forming apparatus 10 generates the irregular size information based on the input irregular sheet size (step S802). Subsequently, the image forming apparatus 10 registers the generated irregular size information in the first irregular-sized sheet information table (step S803).

On the other hand, when the printer driver is activated (step S804; Yes), the client terminal 20 transmits the irregular size information obtaining request to the image forming apparatus 10 (step S805).

When the irregular size information obtaining request is received from the client terminal 20, the image forming apparatus 10 transmits the generated irregular size information to the client terminal 20 (step S806).

As described above, according to the sixth embodiment, when the printer driver is activated in the client terminal 20, the irregular size information obtaining request is transmitted from the client terminal 20 to the image forming apparatus 10. When the irregular size information obtaining request is received, the image forming apparatus 10 transmits the irregular size information to the client terminal 20. Thus, the user need not perform a user operation to obtain the irregular size information in the client terminal 20.

The present U.S. patent application claims a priority under the Paris Convention of Japanese patent application No. 2007-206484 filed on August 8, 2007, which shall be a basis of correction of an incorrect translation.

## Claims

1. An image forming system comprising:
a data processing apparatus; and
an image forming apparatus, wherein
the data processing apparatus and the image forming apparatus are connected to each other through a communication line, and according to a print instruction transmitted from the data processing apparatus, the image forming apparatus performs an image forming on a sheet specified by the print instruction, wherein
the image forming apparatus comprises:
a setting section to set sheet information including irregular size information indicating a sheet size of an irregular-sized sheet to be used by the image forming apparatus;
a communication section to perform communication with the data processing apparatus through the communication line; and
a transmission control section to control the communication section to transmit the sheet information to the data processing apparatus, and the data processing apparatus comprises:
a communication section to perform the communication with the image forming apparatus through the communication line;
a registration section to register the sheet information received from the image forming apparatus through the communication section; and
a printer driver section to provide, based on the sheet information registered in the registration section, a user with the irregular-sized sheet so as to be able to be specified, and to generate the print instruction including information of the irregular-sized sheet when the irregular-sized sheet is specified by the user.

2. The image forming system of claim 1, wherein
the data processing apparatus further comprises an obtaining request control section to control the communication section to transmit an obtaining request signal which is an obtaining request of the sheet information to the image forming apparatus, and
the transmission control section controls the communication section to transmit the sheet information set in the setting section to the data processing apparatus when the communication section receives the obtaining request signal from the data processing apparatus.

3. The image forming system of claim 2, wherein the obtaining request control section of the data processing apparatus controls the communication section to transmit the obtaining request signal to the image forming apparatus when the data processing apparatus is activated.

4. An image forming apparatus comprising:
a communication section connected to a data processing apparatus through a communication line, to perform an image forming for a sheet specified by a printing instruction transmitted from the data processing apparatus according to the print instruction;
a setting section to set sheet information including irregular size information indicating a sheet size of an irregular-sized sheet to be used by the image forming apparatus; and
a transmission control section to control the communication section to transmit the sheet information to the data processing apparatus.

5. The image forming apparatus or system of any one of the preceding claims, wherein the sheet information includes name information which corresponds to each irregular-sized sheet.

6. The image forming apparatus or system of any one of the preceding claims, wherein the sheet information includes margin amount information indicating a margin amount of an image, which is set for each irregular-sized sheet.

7. The image forming apparatus or system of any one of the preceding claims, wherein
the image forming apparatus comprises an operation section so that the user can perform a key input, and
the setting section sets the sheet information based on an operation signal input from the operation section.

8. The image forming apparatus or system of any one of the preceding claims, wherein
the image forming apparatus comprises an image reading section to read an original image to generate image data, and
the setting section sets the sheet size calculated based on the image data obtained by the image reading section as the irregular size information.

9. The image forming apparatus or system of any one of the preceding claims, wherein
the image forming apparatus comprises a detector which is provided in a sheet feeding section to output data according to the sheet size of the sheet to be fed, and
the setting section sets the sheet size specified according to the data obtained by the detector as the irregular size information.

10. A print control apparatus having a communication section connected to an image forming apparatus through a communication line, and transmits a print instruction to the image forming apparatus through the communication section to instruct the image forming apparatus to perform an image forming for a sheet specified by the print instruction, comprising:
a registration section to register sheet information including irregular size information indicating a sheet size of an irregular-sized sheet to be used by the image forming apparatus, the sheet information being received from the image forming apparatus through the communication section; and
a printer driver section to provide, based on the sheet information registered in the registration section, a user with the irregular-sized sheet so as to be able to be specified, and to generate the print instruction including information of the irregular-sized sheet when the irregular-sized sheet is specified by the user.

11. The print control apparatus of claim 10, comprising an obtaining request control section to control the communication section to transmit an obtaining request signal which is an obtaining request of the sheet information to the image forming apparatus.
